# EUROPEAN PATENT APPLICATION

(11) **EP 4 738 682 A1**
(43) Date of publication of application: **06.05.2026**
(21) Application number: 25211690.0
(22) Date of filing: 28.10.2025
(51) Int. Cl.: H02N 2/10

(54) **PIEZOELECTRIC INERTIAL DRIVE ROTARY STAGE**

(30) Priority: 01.11.2024 US 202463715106 P
(71) Applicant: Thorlabs, Inc., Newton, NJ 07860 (US)
(72) Inventor: HE, Houxi, Newton, USA (US); GAO, Renlong, Newton, USA (US)
(74) Representative: Grättinger Möhring von Poschinger Patentanwälte Partnerschaft mbB

(57) **Abstract**

A piezoelectric inertial drive rotary stage including a piezoelectric inertial driver and a rotor (180). The driver includes a mounting portion (100), a friction portion (135, 136) coupling to the rotor, a movement portion (140) between the mounting portion and friction portion, a piezoelectric element (120) with first end bonded to the mounting portion and second end bonded to a movement portion, the movement portion transferring the motion of the piezoelectric element to the friction portion to drive the rotor.

## Description

### CROSS-REFERENCE TO RELATED APPLICATIONS

This application claims the benefit of U.S. Application 63/715,106, filed on November 1, 2024, the contents of which are incorporated by reference herein.

### TECHNICAL FIELD

The present disclosure generally relates to positioning stage, and more particularly to a compact piezoelectric inertial drive rotary stage.

### BACKGROUND

Based on inverse piezoelectric effect, piezoelectric actuators or motors could transfer electrical field into mechanical strain or movement, which could be used in some motion control applications. A simple piezoelectric actuator could be a piezoelectric element, which could be a monolayer polarized piezoelectric material with electrodes. Under a certain electrical field, the piezoelectric element could deform (expand, contract or shear) in one direction, but the strain is typically lower than several parts per thousand, which means the displacement of the moving part of most monolayer piezoelectric elements with several millimeters' dimension are limited to several microns. Then a multilayer structured piezoelectric actuator, consisting of stacked piezoelectric layers (mechanically in series) that are sandwiched between interdigitated electrodes (electrically in parallel) is used to add up the deforming of each layer to achieve displacement up to a few hundred microns. But the strain remains several parts per thousand according to the mechanically bond in series. Furtherly, a mechanical amplifier with specified structure is used to amplify the displacement of the piezoelectric actuator, but the amplified displacement is still limited to several millimeters.

To get rid of the limited displacement and achieve a larger travel range, a piezoelectric motor or called piezoelectric drive system has been developed with typically a stator or called driver and a rotor, which has a small movement in a cycle of the driver driven by a piezoelectric element and could accumulate small movements when repeating this cycles many times to finally achieve large travel. The travel range of such a piezoelectric motor is typically limited only by the travel range of the rotor. Piezoelectric inertial motor or called piezoelectric inertial drive stage is one kind of piezoelectric motor, in which the piezoelectric element could be integrated into either the stator or the rotor, the rotor could achieve a small movement in a cycle of the driving of the piezoelectric element due to the inertia of the masses of the components involved.

The description provided in the background section should not be assumed to be prior art merely because it is mentioned in or associated with the background section. The background section may include information that describes one or more aspects of the subject technology.

The patents US7535661B2 and US7462974B2 describe the piezoelectric inertial driving actuator comprising a fixing member, a moving piezo element, an oscillation substrate with spring, a moving body that is arranged on the oscillation substrate and is moved by inertia with the substrate. These designs have not introduced any special design on the spring.

The patent US8520327B2 is a typical piezoelectric inertial motor with piezoelectric element integrated in the stator or called "piezoelectric inertia driver." This piezoelectric inertia driver consists of a rigid body portion and a continuous, flexible resilient member with a drive surface portion, an axially rigid portion and an S-shaped resilient portion. This patent has mainly claimed the S-shaped resilient portion and has not introduced any special design on the drive surface and the stiffness of drive portion.

The patent US8593033B2 describes a piezoelectric motor with multiple piezoelectric elements as stator, to drive the rotor by individually control of the multiple piezoelectric elements. This patent does not have any flexure portion to enhance the homing of the piezoelectric elements.

The patent US9312790B2 is a typical piezoelectric inertial motor with piezoelectric element integrated in the stator. This patent has claimed a flexure portion consisting of a tapered spring having a first end with a first width, a second end with a second width, and a turn portion with a turn width, wherein the first width and the second width are smaller than the turn width, which is different from the S-shaped resilient portion in patent US8520327B2. This patent has also introduced a friction pad on the drive surface and preload member but the stiffness of the flexure portion is low and limit the driver's performance.

### SUMMARY

An embodiment of the present disclosure may relate to designing a series of simple and compact structures in the piezoelectric inertial driver for the inertial drive stage. The dual-point contacting design allows the drivers to be easily mounted and preloaded to the rotary stages with only one set screw, and also decreases the reverse displacement during the slip phase of the stick-slip cycle. Different from the patent US8593033B2, the preload force enhances the homing of the piezoelectric elements and enables fast response of the drive portion and high frequency operating of the cycle motion of the piezoelectric elements, and finally enhances the travelling speed of the rotor and axial force generated by the friction.

According to one embodiment of the present disclosure, a compact piezoelectric inertial drive rotary stage design could have a 13x13x8mm size, which is far smaller than other commercial piezoelectric inertial drive rotary stage products. It also has up to ~100 degrees/second speed and 4mNm drive torque, which are faster and higher than other commercial piezoelectric inertial drive stage products. Therefore, embodiments of the present disclosure would be competitive and attractive in the market of compact piezoelectric inertial drive rotary stage.

An embodiment of the present disclosure provides a piezoelectric inertial drive rotary stage including a piezoelectric inertial driver and a rotor. The driver includes a mounting portion, a friction portion coupling to the rotor, a movement portion between the mounting portion and friction portion, a piezoelectric element with first end bonded to the mounting portion and second end bonded to a movement portion, the movement portion transferring the motion of the piezoelectric element to the friction portion to drive the rotor.

### DRAWINGS

FIG. 1 shows a piezoelectric inertial driver according to one embodiment of the present disclosure.
FIG. 2 shows a piezoelectric inertial driver according to one embodiment of the present disclosure.
FIG. 3 shows a piezoelectric inertial driver according to one embodiment of the present disclosure.

### EMBODIMENTS

The description of illustrative embodiments according to principles of the present disclosure is intended to be read in connection with the accompanying drawings, which are to be considered part of the entire written description. In the description of embodiments of the disclosure disclosed herein, any reference to direction or orientation is merely intended for convenience of description and is not intended in any way to limit the scope of the present disclosure. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the disclosure are illustrated by reference to the exemplified embodiments. Accordingly, the disclosure expressly should not be limited to such exemplary embodiments illustrating some possible non-limiting combination of features that may exist alone or in other combinations of features; the scope of the disclosure being defined by the claims appended hereto.

This disclosure describes the best mode or modes of practicing the disclosure as presently contemplated. This description is not intended to be understood in a limiting sense, but provides an example of the disclosure presented solely for illustrative purposes by reference to the accompanying drawings to advise one of ordinary skill in the art of the advantages and construction of the disclosure. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

The piezoelectric inertial drive rotary stage consists of a piezoelectric inertial driver, a rotor which could be a bearing or something has a smooth track and certain travel range, a holder that combines the stator and rotor together and other essential components. In our patent application, we mainly focus on the design of the piezoelectric inertial driver.

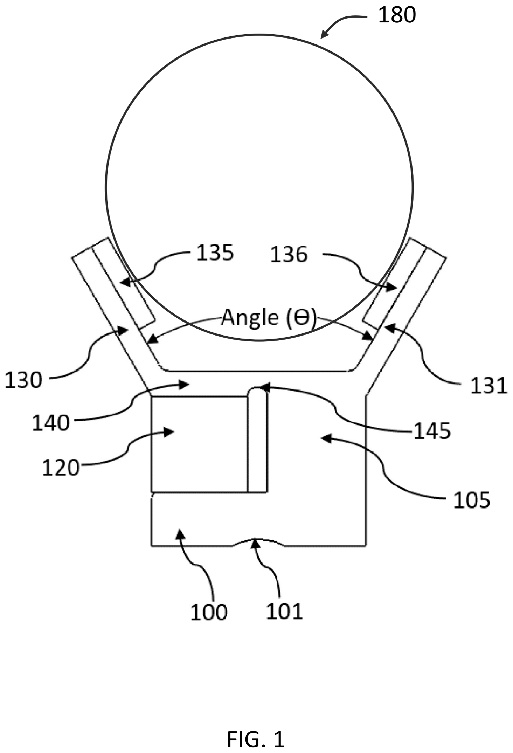

In one embodiment the driver is shown in FIG. 1. FIG. 1 illustrates a front view of the piezoelectric inertial driver that includes a mounting portion 100, a piezoelectric element 120, two connection portions 130 and 131 with angle θ tolerance in the range from 0 degree to 180 degrees, two friction portions 135 and 136, and a movement portion 140. All the portions except piezoelectric element 120 and friction portions 135 and 136 are made from a single piece of high hardness and high stiffness material such as steel, bronze, reinforced polymer, etc. to keep high stiffness of the whole structure, and to achieve compact and cost effective design. The mounting portion 100 has a mounting taper hole 101 for mounting the driver on a holder and this portion will keep static during driving, which makes the whole driver work as a stator. The portion 105 connects the mounting portion 100 and movement portion 140. The portion 145 is a flexible hinge. The mounting taper hole 101 is also used to apply preload between the driver and rotor 180. One of the moving surfaces of the piezoelectric element 120 is bonded to an interface of mounting portion 100 via an adhesive or other suitable attachable means. The other moving surface of the piezoelectric element 120 is bonded to an interface of movement portion 140 via an adhesive or other suitable attachable means. The friction portions 135 and 136 can be made separately or together with the flexure in one piece. In one embodiment, the friction portions 135 and 136 are made from a wear-resistant material such as ceramics, metal with polymer coating etc. to enhance the wear resistance, stability and lifetime during long term operation and they are bonded to the portion 130 and 131 via an adhesive or other suitable attachable means.

For a movement cycle of the piezoelectric inertial driver, the piezoelectric element 120 would expand under a certain electrical signal, push the movement portion 140 to move forward as mounting portion 100 is fixed. The portion 130 would transfer the movement along its length direction from movement portion 140 to friction portion 135 and avoid the transferring of movement along other directions. Then the friction portion 135 would stroke out and rub against the rotor 180, which is well contact with the friction portion 135 and can travel smoothly along or tangential along the friction force direction. With a slow ramped electrical field, the piezoelectric element 120 would drive the friction portion 135 to stick with the rotor and rub the rotor to move forward by static friction; then the electric field suddenly drops down to zero, the expanded piezoelectric element 120 and the deformed movement portion 140 would recover to home position quickly, which will make the friction portion rub backward. The backward rubbing needs to be quick enough to make the friction portion 135 slip from the rotor, at the same time the rotor would move backward a little by the sliding friction. The portion 131 would decrease the backward movement by friction and also plays as a supporting structure. The backward slipping distance is lower than forward sticking distance because of the inertia of the mass of the rotor. Therefore a whole movement cycle of the piezoelectric inertial driver would end up with a small forward moving distance and the mechanism is called "stick-slip" driving. On the other hand, to achieve a backward travelling, the piezoelectric element 120 should firstly drive the friction portion 135 to slip forward with the rotor and then slowly recover home position to make the friction portion 135 stick backward with the rotor and finally make the rotor move backward a small distance.

The stroke distance of friction portion 135 and deformation strain depend on the stiffness of the movement portion 140 and the length and width and adjacent angle of connecting rods portion 130 and 131. Thus through the adjustment of the length and width and adjacent angle of the connection rods 130 and 131, and the radius of the flexible hinge 145, the stroke distance of the friction portion could be adjusted. With preferred stiffness and stroke value, the driver could drive a rotor with bearing to rotate both clockwise and anticlockwise.

When drive the piezoelectric inertial driver under high frequency, the rotor would travel with high speed and the "stick" is no more applicable and the driving mechanism turns into a "slip-slip" mode. The high frequency driving needs high stiffness flexure portion to enable fast response of the drive portion and high frequency operating of the cycle motion of the piezoelectric elements. So in this embodiment, the stiffness of the flexible hinge portion 145 is designed and adjusted with high stiffness for high frequency operation, to achieve high rotation speed and high drive torque.

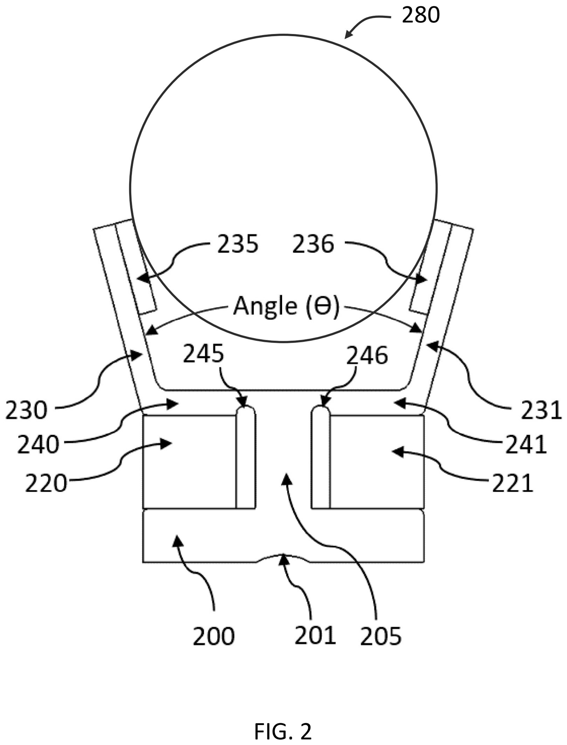

FIG. 2 shows a second embodiment, which is similar to the first embodiment but has two piezoelectric elements 220 and 221. This embodiment also includes a mounting portion 200, two connection portions 230 and 231 with angle θ tolerance in the range from 0 degree to 180 degrees, two friction portions 235 and 236, two movement portions 240 and 241, two flexible hinge portions 245 and 246, sharing the connection portion 205 in the middle. Two piezoelectric element 220 and 221 are connected to two individual friction portions 235 and 236. With two piezoelectric element 220 and 221, the rotary speed and drive torque could be more consistent for both directions. To achieve the performance enhancement in the working cycles, when one piezoelectric element expands, the other one should contract simultaneously and vice versa. Also in this embodiment, the point 201 for preload applying is set in the middle of the driver, which supposed to be used to apply an equally force to the driver, and thus would achieve a stable speed and movement in both directions. The friction portion 235 and 236 are also made from wear-resistant materials to enhance the wear resistance, stability and lifetime during long term operation.

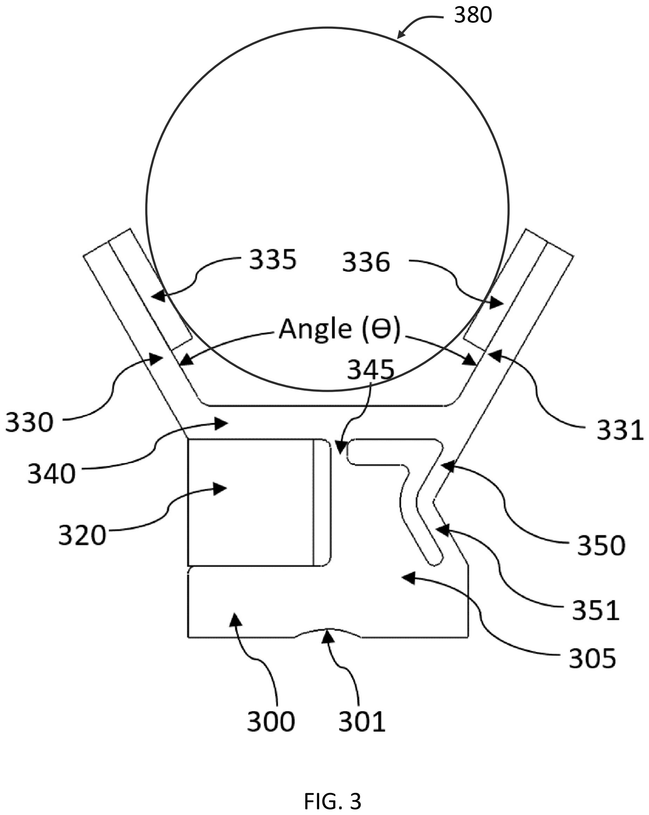

The third embodiment's front view is shown in FIG. 3. Similar as in the first embodiment, this piezoelectric inertial driver consists of a mounting portion 300, a piezoelectric element 320, two connection portions 330 and 331 with angle θ tolerance in the range from 0 degree to 180 degrees, two friction portions 335 and 336, a flexible hinge 345, and a movement portion 340. The difference is that this new driver has flexure portions 350 and 351, which are designed to make the driver have a higher stiffness. When the movement portion 340 is pushed by the piezoelectric portion 320, the push force could be transferred to the flexure portions 350 and 351 through the flexible hinge 345 and that makes the movement portion has a smaller deformation. The flexure portions 350 and 351 are connection rods with angel tolerance in the range from 0 degree to 180 degrees. The number of rods, the angle between adjacent rods, and width of each individual rods could be adjusted to obtain a preferred stiffness of the flexure portion.

While the present disclosure describes at some length and with some particularity with respect to the several described embodiments, it is not intended that it should be limited to any such particulars or embodiments or any particular embodiment, but it is to be construed so as to provide the broadest possible interpretation in view of the related art and, therefore, to effectively encompass various embodiments herein. Furthermore, the foregoing describes various embodiments foreseen by the inventor for which an enabling description was available, notwithstanding those modifications of the disclosure, not presently foreseen, may nonetheless represent equivalents thereto.

## Claims

1. A piezoelectric inertial drive rotary stage, comprising:
a rotor (180, 280, 380);
a piezoelectric inertial driver configured to move the rotor (180);
the driver including:
a mounting portion (100, 200, 300) configured to mount to a holder;
a first connection portion (130, 230, 330) and a second connection portion (131, 231, 331) arranged with an angle θ tolerance in the range from 0 degree to 180 degrees between the first and second connection portions, the first and second connection portions having their respective first and second friction portions (135, 136, 235, 236, 335, 336) at their distal ends;
a first movement portion (140, 240, 340) including:
a first end connected to a first piezoelectric element (120, 220, 320); and
a second end connected to the first connection portion (130, 230, 330);
a first flexure portion (105, 205, 305) including
a first end connected to the mounting portion; and
a second end connected to the movement portion (140, 240, 340) via a flexible hinge (145, 245, 345);
wherein the first piezoelectric element is arranged with its first end bonded to the mounting portion and its second end bonded to the movement portion; and
wherein when an electrical signal is applied to the first piezoelectric element, the first piezoelectric element expands or contracts according to the electrical signal, and the expansion or contraction of the first piezoelectric element causes the movement portion to move, which causes the rotor to move via the first friction portion (135, 235, 335).

2. The piezoelectric inertial drive stage of claim 1, wherein the electrical signal includes a slow ramped up electrical field followed by a sudden drop electrical field.

3. The piezoelectric inertial drive stage of claim 1, wherein the electrical signal includes a sharp increase electrical field followed by a slow drop electrical field.

4. The piezoelectric inertial drive stage of claim 1, the friction portions are made from a wear-resistant material.

5. The piezoelectric inertial drive stage of claim 1, wherein the second connection portion (131) decreases a backward movement of the rotor via the second friction portion and the second connection portion is further configured as a supporting structure for the rotor.

6. The piezoelectric inertial drive stage of claim 1,
wherein the driver includes a second movement portion including:
a first end connected to a second piezoelectric element (221); and
a second end connected to the second connection portion (231);
wherein the second end of the first flexure portion (205) is connected to the second movement portion (241);
wherein the second piezoelectric element is arranged with its first end bonded to the mounting portion and its second end bonded to the second movement portion;
wherein when a second electrical signal is applied to the second piezoelectric element, the second piezoelectric element expands or contracts according to the second electrical signal, and the expansion or contraction of the second piezoelectric element causes the second movement portion to move, which causes the rotor to move via the second friction portion (236).

7. The piezoelectric inertial drive stage of claim 6, wherein the first and second electrical signals are configured to cause the first piezoelectric element to expand and the second piezoelectric element to contract, and vice versa.

8. The piezoelectric inertial drive stage of claim 1, wherein the second end of the first flexure portion (305) is connected to a second and third flexure portions (350, 351) configured to reduce a deformation of the movement portion (340) by transferring a push force from the piezoelectric element to the second and third flexure portions.

9. The piezoelectric inertial drive stage of claim 8, wherein the second and third flexure portions comprises a plurality of rods with intersecting connections, and an angle tolerance between adjacent rods is in the range from 0 degree to 180 degrees.

10. The piezoelectric inertial drive stage of claim 8, wherein each of the plurality of rods, an angle between adjacent rods, and a width of each individual rods are selected to obtain a preferred stiffness of the third and fourth flexure portions.

11. The piezoelectric inertial drive stage of claim 1, 6 or 8, wherein a length and a width of the first and second connection portions are selected to obtain a desired cycle motion distance.

12. The piezoelectric inertial drive stage of claim 1, 6 or 8, further comprising additional piezoelectric elements and friction portions, wherein the number of friction parts is the same or different from the number of piezoelectric elements.
